# FASCICULE DE BREVET EUROPEEN

(11) **EP 4 077 494 B1**
(45) Date de publication et mention de la délivrance du brevet: **05.03.2025**
(21) Numéro de dépôt: 20848959.1
(22) Date de dépôt: 18.12.2020
(51) Int. Cl.: C08J 3/20, C08J 3/22, C08K 3/22, C08L 95/00, C04B 26/26, E01C 7/30, C04B 111/00, C08L 91/00

(54) **COMPOSITIONS DE BRAI, PROCÉDÉS ET UTILISATIONS ASSOCIÉS**
PECHZUSAMMENSETZUNGEN , ZUGEHÖRIGE VERFAHREN UND VERWENDUNGEN
PITCH COMPOSITIONS , RELATED PROCESSES AND USES

(30) Priorité: 20.12.2019 FR 1915214
(43) Date de publication de la demande: 26.10.2022
(73) Titulaire: TotalEnergies OneTech, 92400 Courbevoie (FR)
(72) Inventeur: GAMET, Olivier, 77700 Bailly Romainvilliers (FR); MOUAZEN, Mouhamad, 92000 Nanterre (FR); OEST, Stefan, 25524 Itzehoe (DE)
(74) Mandataire: Cabinet Beau de Loménie
(86) Numéro de dépôt international: PCT/FR2020/052534
(87) Numéro de publication internationale: WO 2021/123666

(56) Documents cités:
- WO-A1-2018/206489
- FR-A1- 3 055 633
- FR-A1- 3 061 190
- GB-A- 1 495 059
- DATABASE WPI Week 201996, Derwent World Patents Index; AN 2019-A4046G, XP002799801

## Description

### Domaine Technique

La présente invention concerne le domaine technique des liants pouvant se substituer aux bitumes, en particulier dans le domaine routier. Plus précisément, l'invention concerne des compositions de brai, leurs procédés de préparation et leurs utilisations dans les domaines routier et industriel.

Un brai de désasphaltage peut être incorporé dans des compositions de bitume, en mélange avec une base bitume. Le brai de désasphaltage constitue un composant économique, qui amène de la dureté à la composition. Mais, le défaut principal d'un brai de désasphaltage est son faible indice de pénétrabilité défini dans la norme EN 1427-Appendice B, qui est inférieur à -1,5, ce qui le rend très sensible à la température contrairement aux bitumes standards. Les brais ne répondent donc pas aux exigences routières, définies dans les normes EN 12591 et EN 13924-1, notamment dans la norme EN 12591. Par ailleurs, un brai de désasphaltage est plus sensible à l'oxydation par rapport à un bitume standard, du fait de sa plus grande teneur en asphaltènes. Lorsqu'il est incorporé dans une composition de bitume, il l'est donc en quantité limitée, n'excédant en général pas 20 à 30% massique, par rapport à la masse totale de la composition. Dans les cas où il est mélangé avec une base de bitume soufflé, une teneur plus importante, pouvant atteindre jusqu'à 75% en masse de la composition totale, peut être adoptée. FR 3 061 190 A1 décrit une composition de liant comprenant au moins : une base de liant choisie parmi une huile, une base de bitume, un brai (brai de désasphaltage), un liant clair, ou un mélange d'une ou plusieurs de ces bases de liant ; un composé acide ; et un composé amide.

Dans le cadre de l'invention, la demanderesse propose de nouvelles compositions de brai qui soient adaptées pour servir de liant, notamment dans le domaine routier, et, en particulier, qui puissent être utilisées pour fabriquer des enrobés ou asphaltes.

Les compositions de brai selon l'invention pourraient donc constituer un substitut aux compositions de bitume, ce qui serait particulièrement avantageux dans le cas de pénuries de bitumes. De plus, dans le cadre de la décision de l'Organisation Mondiale Maritime de réduire en 2020 la limite maximale en soufre dans les carburants maritimes à 0,5% massique, le tonnage disponible en brai pourrait venir à augmenter et l'invention serait une nouvelle voie de valorisation des brais de désasphaltage.

### Invention

Dans ce contexte, les inventeurs ont élaboré de nouvelles compositions de brai qui présentent un indice de pénétrabilité mesuré selon la norme EN1427-Appendice B augmenté, par rapport aux mêmes compositions de brai qui ne comprennent pas d'hydroxyde de sodium.

L'invention concerne une composition de brai comprenant un mélange :
- de brai de désasphaltage, qui représente au moins 50% en masse, et de préférence au moins 80% en masse, et préférentiellement au moins 90% en masse, de la masse totale de la composition, et
- d'un hydroxyde XOH avec X = Na ou K, qui représente de 0,001 à 1 % en masse, de préférence de 0,002 à 0,5 % en masse, et préférentiellement 0,01 à 0,5 % en masse de la masse totale de la composition.

De manière avantageuse, une composition selon l'invention présente l'une des caractéristiques suivantes, plusieurs des caractéristiques suivantes, voire toutes les caractéristiques suivantes :
- l'hydroxyde XOH, avec X = Na ou K, forme des particules qui ont une taille maximale moyenne dans la gamme allant de 10 à 100 µm, de préférence dans la gamme allant de 20 à 60 µm et/ou qui ont une taille maximale inférieure ou égale à 100 µm, de préférence inférieure ou égale à 60 µm ;
- l'hydroxyde XOH est de la soude ;
- elle présente un indice de pénétrabilité déterminé selon la norme EN 1427-Appendice B, supérieur à -1,5, de préférence supérieur ou égal à -1,3 ;
- elle présente une pénétrabilité à l'aiguille à 25°C, déterminée selon la norme EN 1426, qui appartient à la gamme allant de 0 à 50 mm/10 et/ou une température de ramollissement bille anneau, déterminée selon la norme EN 1427, qui appartient à la gamme allant de 50 à 175°C ;
- elle comprend, en outre, un composant hydrocarboné **CH,** choisi parmi les huiles hydrocarbonées, les bitumes de grade mou, les bitumes fluxés, les bitumes fluidifiés et leurs mélanges, ledit composant hydrocarboné **CH** représentant de préférence au plus 10% en masse, préférentiellement 0,1 à 10% en masse, de manière plus préférée 0,5 à 8% en masse, et de manière encore plus préférée 1 à 5% en masse, de la masse totale de la composition.

L'invention a également pour objet un procédé de préparation d'une composition de brai, comprenant les étapes suivantes :
a- disposer d'une composition initiale de brai, et
b- incorporer un hydroxyde XOH avec X = Na ou K, dans une quantité telle que la quantité d'hydroxyde XOH introduite représente de 0,001 à 1% en masse, de la masse totale de la composition de brai finale obtenue,
la composition initiale de brai comprenant du brai en quantité telle que le brai représente au moins 50% en masse, de préférence au moins 80% en masse, et
préférentiellement au moins 90% en masse, de la masse totale de la composition de brai finale obtenue.

Dans le procédé selon l'invention, de manière avantageuse, à l'étape b, une composition hydrocarbonée **IC** comprenant de 15 à 50% en masse d'hydroxyde XOH avec X = Na ou K est incorporée à la composition initiale de brai, ladite composition **IC,** comprenant un composant hydrocarboné **CH,** de préférence choisi parmi les huiles hydrocarbonées, les bitumes de grade mou, les bitumes fluxés, les bitumes fluidifiés et leurs mélanges.

Selon un mode de réalisation préféré, dans le procédé selon l'invention, l'hydroxyde XOH, avec X = Na ou K, est présent dans la composition **IC,** sous la forme de particules qui ont une taille maximale moyenne dans la gamme allant de 10 à 100 µm, de préférence dans la gamme allant de 20 à 60 µm et/ou qui ont une taille maximale inférieure ou égale à 100 µm, de préférence inférieure ou égale à 60 µm.

De manière avantageuse, l'incorporation de la composition hydrocarbonée **IC** dans la composition initiale de brai, est effectuée, à une température appartenant à la gamme allant de 150 à 220 °C, de préférence à la gamme allant de 160 à 190 °C et/ou avec une agitation appartenant à la gamme allant de 100 à 500 tr/min, de préférence à la gamme allant de 200 à 400 tr/min et/ou pendant une durée de 10 à 180 minutes, de préférence de 10 à 20 minutes.

L'invention a également pour objet, l'utilisation d'un hydroxyde XOH avec X = Na ou K, dans une composition qui comprend du brai représentant au moins 50% en masse, de préférence au moins 80% en masse, et préférentiellement au moins 90% en masse, de la masse totale de la composition, dans laquelle l'hydroxyde XOH avec X = Na ou K est introduit dans la composition, dans une quantité représentant de 0,001 à 1% en masse, de préférence, de 0,002 à 0,5 % en masse, et préférentiellement de 0,01 à 0,5 % en masse, de la masse totale de la composition, pour augmenter l'indice de pénétrabilité déterminé selon la norme EN 1427-Appendice B de la composition obtenue, et obtenir, notamment, un indice de pénétrabilité supérieur à -1,5, de préférence supérieur ou égal à - 1,3, les % en masse donnés pour le brai et l'hydroxyde étant calculés par rapport à la masse totale de la composition incluant l'hydroxyde.

L'invention concerne également l'utilisation d'une composition selon l'invention pour préparer un revêtement d'étanchéité, une membrane ou une couche d'imprégnation.

Un procédé de préparation d'un enrobé comprenant le mélange à chaud d'une composition selon l'invention, avec des granulats, et éventuellement des charges minérales et/ou synthétiques, ainsi que les enrobés comprenant une composition selon l'invention, en mélange avec des granulats, et éventuellement des charges minérales et/ou synthétiques, font également partie intégrante de l'invention.

L'invention concerne également un procédé de préparation d'un asphalte comprenant le mélange à chaud d'une composition selon l'invention, avec des charges minérales et/ou synthétiques, ainsi que les asphaltes comprenant une composition selon l'invention, en mélange avec des charges minérales et/ou synthétiques.

L'invention a également pour objet l'utilisation d'une composition selon l'invention, pour préparer un enduit superficiel, un enrobé à chaud, un enrobé à froid, un enrobé coulé à froid, une grave émulsion ou une couche de roulement, ladite composition étant associée à des granulats et/ou des fraisats de recyclage.

L'invention sera mieux comprise au vu de la description détaillée qui va suivre.

### Définitions

Dans le cadre de l'invention, les termes « comprendre » ou « inclure » et leurs déclinaisons « comprend », « inclut », « comprenant », « incluant » n'exclut pas la présence de un ou plusieurs éléments ou étapes d'un procédé que celui, celle ou ceux spécifié(s). Néanmoins, à moins qu'il n'en soit autrement d'après le contexte, de manière préférée, les termes « comprendre » ou « inclure » et leurs déclinaisons signifient « consister exclusivement en » ou sa déclinaison correspondante.

Dans le cadre de l'invention, quand il est question d'un hydroxyde XOH, il faut entendre au moins un hydroxyde XOH (NaOH ou KOH) et donc un seul hydroxyde NaOH ou KOH, tout comme un mélange d'hydroxydes NaOH et KOH ; quand il est fait référence à un composant hydrocarboné, il faut entendre au moins un composant hydrocarboné et donc cela inclut un seul composant hydrocarboné, aussi bien qu'un ou plusieurs composants hydrocarbonés ; lorsqu'il est fait référence à la description ou à l'invention, cela inclut un seul ou plusieurs aspects, tel(s) que décrit(s) dans la présente description. Les différents aspects décrits dans le présent texte sont inclus sous le terme « invention ».

Donc, en particulier, lorsqu'il est fait référence à un hydroxyde XOH, un composé hydrocarboné, un brai ou un bitume mou, cela inclut un seul de ces éléments ou une combinaison ou un mélange de un ou plusieurs de ces éléments. Néanmoins, de manière préférée, ces termes désignent un seul de ces éléments.

Dans le présent texte, « hydroxyde » et « hydroxyde XOH » sont utilisés de manière interchangeable et désignent NaOH, KOH et leurs mélanges.

De même, « brai de désasphaltage » et « brai » sont utilisés de manière interchangeable.

Dans le présent texte, à moins qu'il en soit spécifié autrement, lorsqu'il est fait référence à une norme, il s'agit de la dernière version de cette norme disponible au 1^{er} décembre 2019.

### Brai

Les brais de désasphaltage sont issus des résidus de distillation sous vide du pétrole. Les brais de désasphaltage, également nommés brais dans le cadre de l'invention pour des raisons de simplicité, présentent des caractéristiques différentes des bitumes, notamment en termes d'indice de pénétrabilité et, par conséquent, n'appartiennent pas à la famille des bitumes.

Un brai de désasphaltage peut être obtenu par les procédés conventionnels mis en œuvre sur le pétrole en raffinerie. Lors des opérations de raffinage, le pétrole est soumis à la succession d'une distillation atmosphérique et d'une distillation sous pression réduite (communément appelée distillation sous vide). Les procédés de distillation sous pression atmosphérique et de distillation sous pression réduite, utilisés dans le raffinage du pétrole sont bien connus de l'homme de l'art, comme rapporté dans la présentation du domaine technique de l'invention. Tout procédé de distillation sous pression atmosphérique, conduisant à un résidu de distillation sous pression atmosphérique et tout procédé de distillation sous pression réduite mené sur un ou des résidus de distillation sous pression atmosphérique, et conduisant à un résidus de distillation sous pression réduite (ou sous vide) peuvent être utilisés.

De manière classique, dans un premier temps, le pétrole brut est soumis à une distillation à pression atmosphérique (soit à 1013,25 hPa), qui conduit à l'obtention d'une phase gazeuse, de différents distillats et d'un résidu de la distillation atmosphérique. Cette première étape de distillation permet de récupérer différentes fractions d'hydrocarbures (gaz : butane et propane, essence légère, essence lourde, kérosène, gasoil, fioul domestique...), séparées en fonction de leur température d'ébullition. La distillation atmosphérique est menée dans une colonne à plateaux. A l'issue de cette distillation sous pression atmosphérique, il reste une fraction résiduelle lourde, qui est appelée résidu atmosphérique ou résidu de distillation atmosphérique. Ce résidu atmosphérique contient des hydrocarbures à longues chaînes qui, de ce fait, sont fragiles et sont donc susceptibles d'être coupés en plus petites chaines, si le chauffage est poursuivi à pression atmosphérique. Puis, le résidu de la distillation atmosphérique est soumis lui-même à une distillation sous pression réduite, appelée distillation sous vide, qui permet de séparer un gazole lourd, diverses coupes de distillats et un résidu de distillation sous vide. La pression réduite utilisée pour cette deuxième distillation est, en général, dans la gamme de 10 à 150 hPa. Une telle pression réduite permet d'abaisser la température à laquelle les composants s'évaporent, et permet ainsi de réduire le chauffage. La distillation sous pression réduite est, également, menée dans une colonne à plateaux ou à garnissage, ou un système mixte associant ces deux types de colonnes. A l'issue de cette étape de distillation sous vide, il reste une fraction résiduelle lourde, qui est appelée résidu de distillation sous vide, ou résidu de distillation sous pression réduite. Ce résidu de distillation sous vide contient du brai de désasphaltage en concentration variable.

Il est possible de récupérer le brai de désasphaltage selon le procédé suivant.

Le résidu de distillation sous vide est soumis à une opération de désasphaltage par addition d'un solvant approprié, tel qu'un alcane comme le propane, qui permet ainsi de précipiter le brai et de le séparer des fractions légères telles que l'huile désasphaltée. Avantageusement, l'opération de désasphaltage est réalisée à une température comprise entre 30°C et 200°C, de préférence de 35°C à 90°C et à une pression comprise entre 0,7 MPa et 7 MPa, de préférence de 2 à 5 MPa, de manière plus préférée de 2 à 4 MPa.

De préférence, le brai de désasphaltage selon l'invention, présente une pénétrabilité à l'aiguille à 25°C de 0 à 45 1/10 mm, de préférence de 1 à 40 1/10 mm, plus préférentiellement de 1 à 30 1/10 mm, encore plus avantageusement de 5 à 25 1/10 mm, étant entendu que la pénétrabilité est mesurée selon la norme EN 1426.

De préférence, le brai de désasphaltage selon l'invention présente une température de ramollissement bille et anneaux (TBA) comprise entre 50°C et 175°C, de préférence de 50°C à 140°C, plus préférentiellement de 50°C à 90°C et encore plus avantageusement de 50°C à 65°C, la TBA étant mesurée selon la norme EN 1427.

De préférence, le brai de désasphaltage selon l'invention présente une teneur en carbone Conradson (CCR) de 15 à 55%, de préférence de 25 à 35%, plus préférentiellement de 25 à 30%. La teneur en carbone Conradson (CCR) peut être mesurée selon la norme NF ISO 6615 : (Produits pétroliers - Détermination du résidu de carbone - Méthode Conradson). De préférence, le brai de désasphaltage selon l'invention présente une densité d25°C définie selon la norme EN 15326 dans la gamme allant de 1,05 à 1,15, de préférence dans la gamme allant de 1,05 à 1,10, plus préférentiellement dans la gamme allant de 1,06 à 1,10.

De préférence, le brai de désasphaltage selon l'invention présente une teneur en HAP (Hydrocarbures Aromatiques Polycycliques) mesurée par CG-MS (couplage chromatographie en phase gazeuse / spectrométrie de masse) inférieure ou égale à 100 ppm, de préférence inférieure à 50 ppm. Cette mesure est réalisée sur la liste des 16 HAP classés prioritaires par l'US-EPA (« United States Environmental Protection Agency »).

Dans le cadre de l'invention, tout type de brais de désasphaltage obtenu à partir des résidus de distillation sous vide du pétrole par précipitation par un alcane, notamment par le propane, peut être utilisé.

Les brais de désasphaltage présentent un indice de pénétrabilité déterminé selon la norme EN 1427-Appendice B, généralement inférieur à -1,5.

### Hydroxyde

L'invention concerne les compositions de brai modifiées par introduction d'un hydroxyde XOH dans lequel X = Na ou K, avec de préférence X=Na.

Dans le cadre de l'invention, quand il est question d' « hydroxyde XOH » ou d' « hydroxyde », il s'agit d'un hydroxyde XOH dans lequel X = Na ou K, avec de préférence X=Na (ce qui correspond à la soude).

Dans le cadre de l'invention, un hydroxyde XOH avec X = Na ou K, est utilisé dans une composition qui comprend du brai pour augmenter l'indice de pénétrabilité de la composition de brai obtenue. Lorsqu'il est question d'indice de pénétrabilité dans le cadre de l'invention, celui-ci est déterminé selon la norme EN 1427-Appendice B. Dans les dites compositions de brai obtenues par incorporation d'hydroxyde, le brai représente au moins 50% en masse, de préférence au moins 80% en masse, et préférentiellement au moins 90% en masse, de la masse totale de la composition, et l'hydroxyde est introduit dans la composition, dans une quantité représentant de 0,001 à 1% en masse, de préférence 0,002 à 0,5 % en masse, et préférentiellement de 0,01 à 0,5% en masse, de la masse totale de la composition de brai obtenue. La quantité d'hydroxyde introduite est telle que la composition de brai obtenue présente, de manière avantageuse, un indice de pénétrabilité supérieur à -1,5, de préférence supérieur ou égal à -1,3, et préférentiellement supérieur ou égal à -1,2. De manière préférée, l'indice de pénétrabilité de la composition de brai selon l'invention est inférieur à 5, de préférence inférieur à 1, et préférentiellement dans la gamme allant de -1,3 à 1. L'hydroxyde peut être ainsi utilisé pour modifier toute composition de brai, que cette composition comprenne uniquement du brai ou qu'elle comporte un additif envisagé dans le cadre de l'invention.

En particulier, l'hydroxyde XOH, peut être utilisé sous la forme d'une composition hydrocarbonée **IC** comprenant un composant hydrocarboné **CH** et l'hydroxyde XOH. Une composition hydrocarbonée **IC** sera, de préférence, exclusivement constituée d'un mélange de l'hydroxyde XOH et d'un composant hydrocarboné **CH.** De manière avantageuse, l'hydroxyde XOH se trouve dans une telle composition hydrocarbonée **IC** sous la forme de particules avec au moins 80% en nombre desdites particules qui ont une taille maximale dans la gamme de 10 à 100 µm, de préférence dans la gamme de 20 à 60 µm. Une telle taille de particules permet de mieux contrôler et d'ajuster de manière optimale les propriétés de la composition de brai obtenue. La taille maximale d'une particule qui, en général, est de forme irrégulière, correspond à sa plus grande dimension, notamment mesurée avec un microscope, et de préférence un microscope à lumière visible. Lorsqu'une composition hydrocarbonée **IC** est utilisée, l'hydroxyde XOH représente, de manière avantageuse de 15 à 50% en masse, notamment de 15 à 25% en masse, de la masse de ladite composition hydrocarbonée **IC.** Une telle composition hydrocarbonée **IC** est, alors, introduite dans la composition de brai.

### Composant hydrocarboné

Dans les compositions de brai selon l'invention, l'hydroxyde XOH, peut être introduit, par l'intermédiaire d'une composition hydrocarbonée **IC** comprenant en plus de l'hydroxyde XOH un composant hydrocarboné **CH.** Dans de tels cas, le composant hydrocarboné **CH** va donc se retrouver également dans la composition de brai selon l'invention. En particulier, une composition de brai selon l'invention comprend un composant hydrocarboné **CH,** notamment choisi parmi les huiles hydrocarbonées, les bitumes de grade mou, les bitumes fluxés, les bitumes fluidifiés et leurs mélanges, ledit composant hydrocarboné **CH** représentant de préférence au plus 10% en masse, préférentiellement 0,1 à 10% en masse, de manière plus préférée 0,5 à 8% en masse, et de manière encore plus préférée 1 à 5% en masse, de la masse totale de la composition de brai selon l'invention.

Dans la présente invention, par « composant hydrocarboné », on entend un hydrocarbure, ou un composant comprenant un hydrocarbure, ou composé essentiellement d'un hydrocarbure ou d'un mélange d'hydrocarbures. Un hydrocarbure est composé entièrement d'atomes d'hydrogène et de carbone, ledit composé pouvant être saturé ou insaturé, cyclique ou acyclique. Les alcanes, cycloalcanes, alcènes, alcynes et hydrocarbures aromatiques, notamment les arènes, sont différents exemples d'hydrocarbures. A titre d'exemples préférés de composant hydrocarboné **CH** pouvant être utilisés dans le cadre de l'invention, on peut citer les huiles hydrocarbonées et les bitumes. Le composant hydrocarboné n'est pas un brai de désasphaltage.

De manière avantageuse, le composant hydrocarboné **CH** est un bitume, de préférence un bitume de grade mou tel que défini dans la norme EN 12591 (version 2009), par exemple sous la référence V1500, V3000, V6000 ou V12000 ; ou un bitume fluxé ou fluidifié tel que défini dans la norme EN 15322 (version 2013), par exemple référencé Fm 3-225 X 0, Fm 4-75 X 0, Fm 4-150 X 0, Fm 4-300 X 0, Fm 8 x 0, Fv 3-30 X 0, Fv 3-60 X 0, Fv 3-120 X 0, Fv 5-60 X 0, Fv 5-180 X 0, Fv 8 x 0 ou Fv 9 x 0.

D'autres exemples adaptés de composant hydrocarboné **CH** pouvant être utilisés dans le cadre de l'invention, autres que les bitumes, sont les huiles hydrocarbonées. De telles huiles peuvent être des huiles minérales, des huiles synthétiques, des huiles fluxées, des alcanes, telle que l'huile de cylindre, commercialisée par TOTAL sous la référence 1000 N. Quand une huile est utilisée, elle est de préférence neutre ou basique.

Le composant hydrocarboné **CH** présente, de préférence, une viscosité cinématique à 60 °C, dans la gamme allant de 50 à 20 000 mm²/s, de préférence dans la gamme allant 50 à 150 mm²/s. Une telle viscosité cinématique peut être mesurée selon la norme EN 12595. Avec une telle viscosité, la composition hydrocarbonée **IC** comprenant l'hydroxyde XOH et le composant hydrocarboné **CH** pourra être préparée avec des agitateurs traditionnels, notamment des agitateurs à pales.

Selon une caractéristique avantageuse, le composant hydrocarboné **CH** a une transmittance de la lumière à une longueur d'onde de 900 nm d'au moins 0,03%. Cette transmittance peut être mesurée en utilisant un photomètre tel que le photomètre Hach Lange DR 3900 en particulier avec une cuvette optique en verre de 1cm. Avec une telle transmittance, il est possible de vérifier, notamment par microscopie sous lumière visible que l'hydroxyde XOH se trouve bien sous la forme de particules dans la composition hydrocarbonée IC, et vérifier la taille desdites particules. En particulier, il sera vérifié que l'hydroxyde XOH se trouve dans la composition **IC** sous la forme de particules présentant une taille maximale inférieure ou égale à 100 µm, de préférence inférieure ou égale à 60 µm et notamment, qu'elles ont une taille maximale moyenne dans la gamme de 10 à 100 µm, de préférence dans la gamme de 20 à 60 µm.

### Additif(s)

Les compositions de brai selon l'invention peuvent comprendre exclusivement un brai de désasphaltage et un hydroxyde XOH tels que décrits dans le cadre de l'invention, peuvent comprendre exclusivement un brai de désasphaltage, un hydroxyde XOH et un composant hydrocarboné **CH** tels que décrits dans le cadre de l'invention, ou bien peuvent inclure également un ou plusieurs additifs.

En particulier, si l'hydroxyde XOH est introduit par l'intermédiaire d'une composition hydrocarbonée **IC** comprenant un composant hydrocarboné **CH,** la composition de brai selon l'invention comprendra un tel composant hydrocarboné **CH.**

Aussi, l'invention concerne les compositions de brai qui comprennent, en plus du brai et de l'hydroxyde, un composant hydrocarboné **CH,** de préférence choisi parmi les huiles hydrocarbonées, les bitumes de grade mou, les bitumes fluxés, les bitumes fluidifiés et leurs mélanges, notamment ceux décrits dans la partie « Composant hydrocarboné ».

En général, lorsqu'il est présent, ledit composant hydrocarboné **CH** représente, de préférence, au plus 10% en masse, préférentiellement 0,1 à 10% en masse, de manière plus préférée 0,5 à 8% en masse, et de manière encore plus préférée 1 à 5% en masse, de la masse totale de la composition de brai.

Par ailleurs, les compositions de brai selon l'invention peuvent inclure un ou plusieurs additifs, dont l'incorporation a déjà été décrite dans des compositions de bitumes.

En particulier, les compositions de brai selon l'invention peuvent inclure un promoteur d'adhésion, notamment choisi parmi les amines, diamines, polyamines, alkyl amido amines, amidopolyamines, imidazolines, et leurs mélanges. De tels promoteurs d'adhésion sont notamment décrits dans la demande WO 2018/206489 à laquelle on pourra se référer pour plus de détails.

En particulier, un tel promoteur d'adhésion est choisi parmi :
i) Les amines de formule (I): 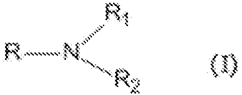 dans laquelle :
   - R est un groupe hydrocarboné saturé ou insaturé, substitué ou non substitué, optionnellement branché ou cyclique, comprenant 8 à 24 atomes de carbone, par exemple, R est un groupe hydrocarboné dérivé des acides gras de la suie ou des acides gras de l'huile de tall ; et
   - R₁ et R₂, identiques ou différents, sont un atome d'hydrogène ou un groupe hydrocarboné comprenant de 1 à 24 atomes de carbone; R₁ et R₂ sont, de préférence, un atome d'hydrogène ou un groupe méthyle;
ii) Les diamines et les polyamines de formule (II) :

   R-(NH-L)n-NH₂ (II)

   dans laquelle :
   - R est tel que défini pour (I),
   - L représente une chaine hydrocarbonée linéaire ou branchée comprenant de 1 à 6 atomes de carbone, par exemple L est -(CH₂)m- avec m = 1, 2 ou 3 et,
   - n est un entier supérieur ou égal à 1, en particulier, n est égal à 1, 2, 3, 4, 5 ou 6,
iii) Les alkyl amido amines de formule (III) : 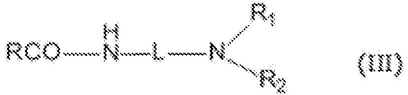 dans laquelle R, R₁, R₂ et L sont tels que définis pour (I) et (II);
iv) Les amidopolyamines de formule (IV) et les imidazolines :

   RCO-(NH-L)p-NH₂ (IV)
dans laquelle R et L sont tels que définis pour (I) et (II), et p est un entier supérieur ou égal à 1, en particulier p est un entier dans la gamme allant de 1 à 10.

De manière avantageuse, le promoteur d'adhésion est sélectionné parmi les amines, diamines, polyamines, alkyl amido amines et amidopolyamines comprenant une chaine grasse, et en particulier parmi celles précédemment décrites. En particulier, le promoteur d'adhésion est un amidopolyamine comprenant une chaine grasse, de formule :

RCO-[NH-L]p-NH₂ (IV)

où:
- p est un entier supérieur ou égal à 1, en particulier p est un entier dans la gamme allant de 1 à 10,
- L représente une chaine hydrocarbonée linéaire ou branchée comprenant de 1 à 6 atomes de carbone, par exemple L est -(CH₂)m- avec m = 1, 2 ou 3,
- R est un groupe hydrocarboné saturé ou insaturé, substitué ou non substitué, optionnellement branché ou cyclique, comprenant 8 à 24 atomes de carbone.

De manière préférée, le promoteur d'adhésion utilisé dans les compositions de brai selon l'invention est un mélange d'amidopolyamines de formula (IV) dans laquelle p est un entier dans la gamme allant de 1 à 10, L est -(CH₂)₂-, et R correspond aux chaines hydrocarbonées des acides gras de l'huile de tall.

En général, lorsqu'il est présent, ledit promoteur d'adhésion représente, de préférence, 0,01 à 2 % en masse, préférentiellement 0,05% à 1% en masse, et de manière encore plus préférée 0,1 à 0,3 % en masse, de la masse totale de la composition de brai selon l'invention.

Il est également possible d'inclure, comme cela est fait, dans certaines compositions de bitume, un ou plusieurs polymères.

Les compositions de brai selon l'invention peuvent inclure un agent (nommé agent réducteur de température) permettant d'abaisser la température à laquelle les compositions de brai selon l'invention peuvent être utilisées de manière satisfaisante, en tant que liant. A titre d'exemple de réducteurs de température, on peut citer à titre d'exemple, les dérivés de l'huile de tall (Tall Oil), pris seuls ou en mélange avec un monoester d'un mélange d'acides gras, tels que ceux décrits dans le document WO 2010/134024. On peut également citer, comme additifs appropriés selon l'invention, les additifs décrits dans le document WO 2012/049579 et dans le document WO 2014/095995. De préférence, on utilise des agents notamment commercialisés par Arkema, sous la référence Cecabase RT bio 10, notamment.

En général, lorsqu'il est présent, ledit réducteur de température représente, de préférence, 0,01 à 3 % en masse, et préférentiellement 0,05 à 0,3 % en masse, de la masse totale de la composition de brai selon l'invention.

### Procédé de préparation des compositions de brai selon l'invention

Les compositions de brai de l'invention peuvent être préparées par tout procédé adapté, bien connu de l'homme du métier. En règle générale, ces procédés comprennent le mélange des composants et le chauffage du mélange.

L'hydroxyde peut être directement introduit dans une composition initiale de brai, directement sous la forme d'une poudre ou sous la forme d'une solution dans un solvant adéquat. En tant qu'exemple de solvant permettant de solubiliser l'hydroxyde, on peut citer l'eau ou le méthanol. L'hydroxyde peut être présent dans une telle solution, par exemple à une concentration de 10 à 50% en masse par rapport à la masse totale de la solution. Un solvant approprié aura de préférence un point d'ébullition inférieur ou égal à 100°C à 1013,3 hPa. Il sera choisi, de préférence de telle sorte qu'il s'évapore spontanément, lorsque la solution d'hydroxyde est incorporée dans la composition initiale de brai.

Qu'il soit introduit directement sous la forme d'une poudre ou d'une solution dans un solvant approprié, la quantité introduite est sélectionnée, de manière à obtenir au final dans la composition de brai selon l'invention, une quantité d'hydroxyde qui représente de 0,001 à 1% en masse, de préférence 0,002 à 0,5 % en masse, et préférentiellement de 0,01 à 0,5 % en masse, de la masse totale de la composition de brai obtenue.

De manière avantageuse, l'hydroxyde est introduit, dans une composition initiale de brai, sous la forme d'une poudre de particules présentant une taille maximale inférieure ou égale à 100 µm, de préférence inférieure ou égale à 60 µm. De manière encore plus préférée, l'hydroxyde est introduit, dans une composition initiale de brai, sous la forme d'une poudre de particules présentant une taille maximale moyenne dans la gamme allant de 10 à 100 µm, de préférence allant de 20 à 60 µm. Une poudre anhydre sera, de préférence, utilisée. La taille maximale moyenne des particules correspond à la moyenne arithmétique des tailles maximales d'un ensemble de particules, de préférence d'au moins 20 particules, et notamment de 20 particules. La taille maximale peut être mesurée par microscopie. La taille des particules introduites peut être ajustée par différentes techniques notamment par broyage et/ou tamisage.

Selon un mode de réalisation préféré, l'hydroxyde, en particulier, sous la forme de particules, est introduit grâce à une composition hydrocarbonée **IC.**

Une telle composition hydrocarbonée **IC** comprend, voire est constituée exclusivement de l'hydroxyde réparti dans un composant hydrocarboné **CH** tel que précédemment décrit.

En particulier, l'hydroxyde représente, de préférence, 15 à 50 % et préférentiellement 15 à 25 % en masse, de la masse totale de la composition hydrocarbonée **IC.** De manière analogue à ce qui est décrit dans le cas d'une introduction directe de l'hydroxyde dans la composition initiale de brai, l'hydroxyde peut être introduit dans le composant hydrocarboné **CH,** directement sous la forme d'une poudre ou sous la forme d'une solution dans un solvant adéquat. Mais, de manière avantageuse, l'hydroxyde est introduit, dans la composition hydrocarbonée **IC,** sous la forme d'une poudre de particules présentant une taille maximale inférieure ou égale à 100 µm, de préférence inférieure ou égale à 60 µm. De manière encore plus préférée, l'hydroxyde est introduit, dans la composition hydrocarbonée **IC,** sous la forme d'une poudre de particules présentant une taille maximale moyenne dans la gamme allant de 10 à 100 µm, de préférence allant de 20 à 60 µm. Une poudre anhydre sera, de préférence, utilisée.

De manière avantageuse, le composant hydrocarboné **CH,** de la composition hydrocarbonée **IC,** présente une transmittance de la lumière, à une longueur d'onde de 900 nm, d'au moins 0,03%. Une telle transmittance peut être mesurée à l'aide d'un photomètre tel qu'un photomètre Hack Lange DR 3900, en particulier ayant une cuve en verre de 1 cm. Avec un telle transmittance, il est possible de contrôler par microscopie, et en particulier par microscopie sous lumière visible, que l'hydroxyde forme bien des particules dans la gamme de taille souhaitée, dans la composition hydrocarbonée **IC.** En général, lorsque l'hydroxyde est incorporé dans la composition hydrocarbonée **IC,** sous la forme de particules d'une taille donnée, cette taille est conservée ou sensiblement conservée dans la composition hydrocarbonée **IC.** Le plus souvent, dans la poudre comme dans la composition hydrocarbonée **IC,** les particules d'hydroxyde ne sont pas sphériques et ont des formes irrégulières. Quand il est question de taille des particules dans le cadre de l'invention, on entend donc la taille maximale qui correspond à la plus grande dimension qui peut être mesurée, notamment grâce à un microscope. Cette taille peut directement être mesurée sur la composition **IC,** si la transmittance du composant hydrocarboné **CH** est suffisante.

En particulier dans la composition hydrocarbonée **IC,** l'hydroxyde forme des particules dont au moins 80% en nombre ont une taille maximale dans la gamme allant de 10 à 100 µm, de préférence, dans la gamme allant de 20 à 60 µm et/ou qui ont une taille maximale inférieure ou égale à 100 µm, de préférence inférieure ou égale à 60 µm. De manière encore plus préférée, l'hydroxyde XOH se trouve dans la composition **IC** sous la forme de particules présentant une taille maximale moyenne dans la gamme de 10 à 100 µm, de préférence dans la gamme de 20 à 60 µm. Par contre, la taille des particules d'hydroxyde ne peut pas être vérifiée dans la composition de brai, selon l'invention.

Par ailleurs, l'utilisation d'une composition hydrocarbonée **IC** comprenant l'hydroxyde, permet de protéger l'hydroxyde contre l'humidité et de favoriser son stockage, avant son introduction dans la composition initiale de brai.

De manière avantageuse, une telle composition hydrocarbonée **IC** comprend un composant hydrocarboné présentant une viscosité cinématique à 60 °C mesurée selon la norme EN 12595 dans la gamme allant de 50 à 20 000mm²/s, de préférence dans la gamme allant de 50 à 150 mm²/s. Avec de telles viscosités, la préparation d'une telle composition et l'introduction de l'hydroxyde nécessitent un dispositif de mélange classique, tels que des agitateurs à pales.

En particulier, la préparation d'une composition hydrocarbonée **IC** pourra être effectuée par mélange du composant hydrocarboné **CH** et de l'hydroxyde à une température dans la gamme allant de 30 à 220°C, de préférence dans la gamme allant de 40 à 190°C et/ou avec une agitation dans la gamme allant de 300 à 800 tr/min, de préférence dans la gamme de 500 à 650 tr/min et/ou pendant une durée de 10 à 120 minutes, de préférence de 10 à 20 minutes. Les paramètres du mélange et la température seront ajustés par l'homme du métier, en fonction du composant hydrocarboné **CH** sélectionné.

Lors de la préparation d'une telle composition hydrocarbonée **IC,** le composant hydrocarboné **CH** pourra être chauffé à une température à laquelle il se trouve à l'état liquide, de manière à favoriser l'incorporation et la répartition de l'hydroxyde. Par exemple, une température juste suffisante pour obtenir la fusion du composant hydrocarboné **CH** pourra être utilisée, notamment lorsque l'hydroxyde est introduit sous la forme d'une poudre. Lorsque l'hydroxyde est introduit sous la forme d'une solution dans un solvant, de préférence, le composant hydrocarboné **CH** sera soumis à un chauffage adapté pour obtenir l'évaporation spontanée du solvant, de manière simultanée à l'incorporation de la solution d'hydroxyde.

Lorsque l'hydroxyde est introduit par l'intermédiaire d'une composition hydrocarbonée **IC,** la quantité présente dans cette composition va déterminer la quantité de composition hydrocarbonée **IC** introduite. En effet, cette composition hydrocarbonée **IC** est introduite en quantité telle dans la composition de brai initiale, de manière à obtenir au final dans la composition de brai selon l'invention, une quantité d'hydroxyde qui représente de 0,001 à 1% en masse, de préférence de 0,002 à 0,5 % en masse, et préférentiellement, de 0,01 à 0,5 % en masse, de la masse totale de la composition de brai obtenue.

En général, le pourcentage massique de l'hydroxyde dans la composition hydrocarbonée **IC** est au moins 30 fois égal au pourcentage massique d'hydroxyde dans la composition finale de brai et, de préférence, au plus 100 fois égal au pourcentage massique de l'hydroxyde dans la composition finale de brai selon l'invention.

Le procédé de préparation des compositions de brai selon l'invention peut inclure la préparation d'une composition hydrocarbonée **IC,** lorsqu'une telle composition est utilisée pour introduire l'hydroxyde dans la composition de brai initiale. Il est également possible que le procédé de préparation des compositions de brai selon l'invention comporte une étape de stockage de la composition hydrocarbonée **IC** pendant au moins une heure et par exemple pendant une durée de 1 à 30 jours, notamment à une température dans la gamme allant de 10 à 40 °C et, de préférence, à une température dans la gamme allant de 20 à 30 °C, et, notamment à l'air ambiant. La composition hydrocarbonée **IC** est assez stable dans de telles conditions, de sorte qu'une même composition hydrocarbonée **IC** avec des caractéristiques spécifiques pourra être utilisée pour la préparation de plusieurs compositions de brai. De plus, la composition hydrocarbonée **IC** peut être stockée et transportée sans précaution particulière, contrairement à l'hydroxyde XOH.

Selon des modes de réalisation, qui peuvent être combinés aux précédents, avant l'addition de l'hydroxyde dans la composition initiale de brai, le procédé selon l'invention peut comprendre une étape de vérification, par exemple par microscopie, et de manière avantageuse par microscopie à la lumière visible, que l'hydroxyde forme des particules dans la composition hydrocarbonée **IC** avec au moins 80% en nombre desdites particules qui ont une taille maximale dans la gamme allant de 10 à 100 µm et préférentiellement dans la gamme allant de 20 à 60 µm et/ou que lesdites particules ont une taille maximale inférieure ou égale à 100 µm, de préférence inférieure ou égale à 60 µm. De manière encore plus préférée, le procédé selon l'invention peut comprendre une étape de vérification, par exemple par microscopie, et de manière avantageuse par microscopie à la lumière visible, que l'hydroxyde XOH se trouve dans la composition **IC** sous la forme de particules présentant une taille maximale moyenne dans la gamme de 10 à 100 µm, de préférence dans la gamme de 20 à 60 µm.

Lorsqu'une composition intermédiaire **IC** est utilisée, avant son introduction dans la composition initiale de brai, la composition hydrocarbonée **IC** sera, de préférence, chauffée à une température dans la gamme allant de 30 à 50 °C, de préférence dans la gamme allant de 40 à 50 °C, avantageusement sous agitation et, en particulier, sous une agitation de 300 à 1000 tr/min, de préférence sous une agitation de 400 à 800 tr/min et/ou pendant un temps de 10 à 120 minutes et de préférence pendant un temps de 10 à 20 minutes. Une température basse, de préférence de 40 à 50 °C, est également avantageuse, pour favoriser le contrôle de la taille des particules d'hydroxyde XOH.

Une telle température est, en particulier, utilisée, lorsque le composant hydrocarboné **CH** présente une viscosité cinématique à 60 °C dans la gamme allant de 20 à 20 000mm²/s, de préférence dans la gamme allant de 50 à 150 mm²/s. Là encore, les paramètres de mélange et la température seront ajustés par l'homme du métier en fonction du composant hydrocarboné **CH** sélectionné.

De manière classique, l'hydroxyde, que celui-ci soit introduit directement sous la forme d'une poudre, d'une solution ou d'une composition hydrocarbonée **IC,** se fera, dans la composition initiale de brai, sous mélange et chauffage. En général, la composition initiale de brai sera chauffée sous agitation, avant l'incorporation de l'hydroxyde. Les paramètres de mélange et de chauffage seront ajustés par l'homme du métier en fonction des propriétés du brai utilisé.

L'incorporation des particules d'hydroxyde, que ce dernier soit sous la forme d'une poudre, d'une solution ou d'une composition hydrocarboné **IC,** pourra, notamment, se faire par mélange à une température dans la gamme allant de 150 à 220 °C, de préférence à une température dans la gamme allant de 160 à 190 °C et/ou sous une agitation dans la gamme allant de 100 à 500 tr/min, de préférence dans la gamme allant de 200 à 400 tr/min et/ ou pendant une durée de 10 à 180 minutes, de préférence pendant une durée 10 à 20 minutes. Là encore, les paramètres d'agitation et de mélange seront ajustés par l'homme du métier en fonction notamment des composants sélectionnés. Le mélange et le chauffage peuvent être maintenus pendant un certain temps à l'issue de l'incorporation, notamment à une température dans la gamme allant de 150 à 220 °C, de préférence à une température dans la gamme allant de 160 à 190 °C et/ou sous une agitation dans la gamme allant de 100 à 500 tr/min, et/ ou pendant une durée de 10 à 240 minutes.

Quel que soit le mode de réalisation utilisé, la composition finale de brai pourra correspondre à la composition directement obtenue à l'issu de l'étape b. Lorsque la composition de brai inclut un ou plusieurs additifs, ce(s) additif(s) pourra(ont) être incorporé(s) dans la composition de brai, avant l'introduction de l'hydroxyde ou introduits après l'hydroxyde. Lorsque la composition comprend plusieurs additifs, il est, également, possible que l'un ou l'autre des additifs soit déjà présent et que un ou plusieurs autre(s) additif(s) soi(en)t introduit(s) après. Selon un mode de réalisation préféré, le procédé selon l'invention comprend après l'étape b, une étape additionnelle correspondant à l'addition d'un additif conduisant à une composition finale de brai.

En particulier, lorsque la composition finale de brai comprend un promoteur d'adhésion tel que décrit dans le cadre de l'invention, un tel promoteur d'adhésion est, de préférence, introduit dans une étape c, postérieure à l'étape b après l'introduction de l'hydroxyde.

Dans le procédé selon l'invention, on nomme composition initiale de brai, la composition comprenant le brai dans laquelle l'hydroxyde est introduit. Cette dernière pourra être constituée exclusivement de brai, d'un mélange de brai avec un ou plusieurs additif(s) et/ou une base bitume. Les composants de la compostions initiale de brai seront présents dans des quantités adaptées pour obtenir les quantités souhaitées dans la composition de brai selon l'invention. Bien que ceci ne soit pas préféré, il n'est pas exclu que la composition initiale de brai comprenne un bitume, et notamment un bitume de grade dur, notamment de grade 10/20 ou 15/25 défini par la norme 13924-1 ou 20/30 ou 30/45 ou 35/50 défini par la norme EN 12591, mais dans des quantités limitées, de manière à ce qu'au final, le brai représente au moins 50% en masse, et de préférence au moins 80% en masse, et préférentiellement au moins 90% en masse, de la masse totale de la composition de brai obtenue. En particulier, l'absence d'un bitume de grade dur dans la composition de brai initiale permet de ne réaliser qu'un seul mélange en cuve, l'incorporation de l'hydroxyde pouvant être directement réalisée en ligne.

### Compositions selon l'invention - modes de réalisation préférés

L'invention concerne les compositions de brai modifié comprenant un brai de désasphaltage et un hydroxyde XOH tels que décrits dans le cadre de l'invention. Lesdites compositions peuvent également inclure un ou plusieurs additifs, en particulier tels que précédemment décrits. Par ailleurs, bien que ces modes de réalisations ne soient pas préférés, il est possible que les compositions selon l'invention comprennent un bitume de grade dur, notamment de grade 10/20 ou 15/25 définis par la norme 13924-1 ou 20/30 ou 30/45 ou 35/50 définis par la norme EN 12591. De préférence, lorsqu'il est présent, un tel bitume de grade dur représente au plus 20% en masse de la masse totale de la composition de brai selon l'invention.

Dans les compositions de brai selon l'invention, les différents composants sont répartis dans le brai. Une telle répartition est obtenue grâce au mélange appliqué lors de la préparation des compositions selon l'invention.

Certaines des compositions particulièrement préférées dans le cadre de l'invention sont reprises ci-après. Les % donnés sont des % massiques, par rapport à la masse totale de la composition. De manière avantageuse, dans la description ci-après, on utilisera ensemble les premières gammes citées pour les différents composants listés, ou les deuxièmes gammes citées pour les différents composants listés, ou les troisièmes gammes citées pour les différents composants listés.

En particulier, l'invention concerne les compositions comprenant les composants suivants :
- de 50 à 99,999 %, de préférence, de 80 à 99,998 %, et préférentiellement de 90 à 99,99 % de brai de désasphaltage, et
- de 0,001 à 1 %, de préférence, de 0,002 à 0,5 %, et préférentiellement de 0,01 à 0,5 % d'hydroxyde XOH dans lequel X = Na ou K ; et avantageusement de 0,001 à 1 %, de préférence, de 0,002 à 0,5 %, et préférentiellement de 0,01 à 0,5 % de soude.

Selon certains modes de réalisation, l'invention concerne les compositions comprenant les composants suivants :
- de 50 à 99,899 %, de préférence, de 80 à 99,498 %, et préférentiellement de 90 à 98,99 % de brai de désasphaltage,
- de 0,001 à 1 %, de préférence, de 0,002 à 0,5 %, et préférentiellement de 0,01 à 0,5 % d'hydroxyde XOH dans lequel X = Na ou K ; et avantageusement de 0,001 à 1 %, de préférence, de 0,002 à 0,5 %, et préférentiellement de 0,01 à 0,5 % de soude,
- de 0,1 à 10 %, de préférence, de 0,5 à 8 %, et préférentiellement de 1 à 5%, d'un composant hydrocarboné **CH,** choisi parmi les huiles hydrocarbonées, les bitumes de grade mou, les bitumes fluxés, les bitumes fluidifiés et leurs mélanges.

Selon certains modes de réalisation, l'invention concerne les compositions constituées exclusivement des composants suivants :
- de 89 à 99,899 %, de préférence, de 91,5 à 99,498 %, et préférentiellement de 94,5 à 98,99 % de brai de désasphaltage,
- de 0,001 à 1 %, de préférence, de 0,002 à 0,5 %, et préférentiellement de 0,01 à 0,5 % d'hydroxyde XOH dans lequel X = Na ou K ; et avantageusement de 0,001 à 1 %, de préférence, de 0,002 à 0,5 %, et préférentiellement de 0,01 à 0,5 % de soude, et
- de 0,1 à 10 %, de préférence, de 0,5 à 8 %, et préférentiellement de 1 à 5% d'un composant hydrocarboné **CH,** choisi parmi les huiles hydrocarbonées, les bitumes de grade mou, les bitumes fluxés, les bitumes fluidifiés et leurs mélanges.

Selon certains modes de réalisation, l'invention concerne les compositions comprenant les composants suivants :
- de 50 à 99,889 %, de préférence, de 80 à 99,448 %, et préférentiellement de 90 à 98,89 % de brai de désasphaltage,
- de 0,001 à 1 %, de préférence, de 0,002 à 0,5 %, et préférentiellement de 0,01 à 0,5 % d'hydroxyde XOH dans lequel X = Na ou K ; et avantageusement de 0,001 à 1 %, de préférence, de 0,002 à 0,5 %, et préférentiellement de 0,01 à 0,5 % de soude,
- de 0,1 à 10 %, de préférence, de 0,5 à 8 %, et préférentiellement de 1 à 5% d'un composant hydrocarboné CH, choisi parmi les huiles hydrocarbonées, les bitumes de grade mou, les bitumes fluxés, les bitumes fluidifiés et leurs mélanges,
- de 0,01 à 2 %, de préférence, de 0,05 à 1 %, et préférentiellement de 0,1 à 0,3 % de promoteur d'adhésion, de préférence choisi parmi les amines, diamines, polyamines, alkyl amido amines, amidopolyamines, imidazolines, et leurs mélanges.

Selon certains modes de réalisation, l'invention concerne les compositions constituées exclusivement des composants suivants :
- de 87 à 99,889 %, de préférence, de 90,5 à 99,448 %, et préférentiellement de 94,2 à 98,89 % de brai de désasphaltage,
- de 0,001 à 1 %, de préférence, de 0,002 à 0,5 %, et préférentiellement de 0,01 à 0,5 % d'hydroxyde XOH dans lequel X = Na ou K ; et avantageusement de 0,001 à 1 %, de préférence, de 0,002 à 0,5 %, et préférentiellement de 0,01 à 0,5 % de soude,
- de 0,1 à 10 %, de préférence, de 0,5 à 8 %, et préférentiellement de 1 à 5% d'un composant hydrocarboné **CH,** choisi parmi les huiles hydrocarbonées, les bitumes de grade mou, les bitumes fluxés, les bitumes fluidifiés et leurs mélanges,
- de 0,01 à 2 %, de préférence, de 0,05 à 1 %, et préférentiellement de 0,1 à 0,3 % de promoteur d'adhésion, de préférence choisi parmi les amines, diamines, polyamines, alkyl amido amines, amidopolyamines, imidazolines, et leurs mélanges.

Bien entendu, le brai et l'hydroxyde, et le promoteur d'adhésivité, et le composant hydrocarboné **CH,** lorsqu'ils sont présents, correspondent, de préférence, à ceux spécifiquement décrits ou préférés dans le cadre de l'invention.

Les compositions obtenues par mélange des différents composants listés, dans les proportions données, voire obtenues par mélange uniquement des différents composants listés, dans les proportions données, font également partie intégrante de l'invention.

### Utilisation et mise en œuvre des compositions de brai selon l'invention

Diverses utilisations des compositions selon l'invention sont envisagées. En particulier, les compositions selon l'invention peuvent être utilisées en tant que liant en remplacement du bitume. En tant que liant, une composition selon l'invention peut être employée pour préparer une association avec des granulats, notamment routiers. S'agissant des applications routières, l'invention vise notamment des enrobés comme matériaux pour la construction et l'entretien des corps de chaussée et de leur revêtement, ainsi que pour la réalisation de tous travaux de voirie.

Par enrobé, on entend, un mélange d'un liant avec des granulats et éventuellement des charges minérales et/ou synthétiques. L'enrobé comprend une composition telle que décrite dans le cadre de l'invention, en tant que liant et éventuellement des charges minérales et/ou synthétiques, de préférence choisies parmi des fines, du sable, des gravillons et des fraisats de recyclage. Les granulats sont des granulats minéraux et/ou synthétiques, notamment, des fraisats de recyclage, de dimensions supérieures à 2 mm, de préférence comprises entre 2 mm et 20 mm.

Aussi, l'invention a également pour objet un procédé de préparation d'un enrobé comprenant le mélange à chaud d'une composition selon l'invention, avec des granulats, et éventuellement des charges minérales et/ou synthétiques.

Une composition selon l'invention, peut, avantageusement être utilisée pour préparer un enduit superficiel, un enrobé à chaud, un enrobé à froid, un enrobé coulé à froid ou une grave émulsion. S'agissant des applications routières, l'invention vise également des asphaltes comme matériaux pour fabriquer et recouvrir des trottoirs.

Par asphalte, on entend, un mélange de liant avec des charges minérales et/ou synthétiques. Un asphalte comprend une composition telle que décrite dans le cadre de l'invention et des charges minérales telles que des fines, du sable ou des gravillons et/ou des charges synthétiques. Les charges minérales sont constituées de fines (particules de dimensions inférieures à 0,063 mm), de sable (particules de dimensions comprises entre 0,063 mm et 2 mm) et éventuellement de gravillons (particules de dimensions supérieures à 2 mm, de préférence comprises entre 2 mm et 4 mm). Les asphaltes présentent 100% de compacité et sont principalement utilisés pour fabriquer et recouvrir des trottoirs, alors que les enrobés possèdent une compacité inférieure à 100% et sont utilisés pour fabriquer des routes. Contrairement aux enrobés, les asphaltes ne sont pas compactés au rouleau lors de leur mise en place.

Aussi, l'invention a également pour objet un procédé de préparation d'un asphalte comprenant le mélange à chaud d'une composition selon l'invention, avec des charges minérales et/ou synthétiques.

Un autre aspect de l'invention concerne l'utilisation d'une composition selon l'invention dans diverses applications industrielles, notamment pour préparer un revêtement d'étanchéité, une membrane ou une couche d'imprégnation. S'agissant des applications industrielles des compositions selon l'invention, on peut citer la fabrication de membranes d'étanchéité, de membranes anti-bruit, de membranes d'isolation, des revêtements de surface, des dalles de moquette, des couches d'imprégnation.

Les exemples ci-après permettent d'illustrer l'invention, mais n'ont aucun caractère limitatif.

### Réactifs

L'hydroxyde de sodium était anhydre et sa pureté était supérieure à 99%, il se présentait sous la forme de pastilles (CARL ROTH GMBH & Co. KG, Article No 9356.1).

Le brai a été obtenu à partir d'un résidu de distillation sous vide, tout d'abord chauffé à 67°C, soumis à une pression de 3,4 MPa, et après réalisation d'une extraction au propane, le propane étant ajouté à une température de 36°C. Son numéro CAS est 91995232.

Le brai utilisé à une teneur en CCR de 30%, une teneur en HAP (16 types de composés classés prioritaires selon l'US-EPA) de 15ppm et une densité d25°C de 1,08, déterminées selon les méthodes précitées dans la description.

Le promoteur d'adhésion H1 était un additif aminé : WETFIX BE de Akzo Nobel Surface Chemistry AB (CAS 68910-93-0).

Le bitume fluxé était commercialisé par TOTAL sous la référence SOFT^{®} BITUMEN. Il avait une viscosité cinématique à 60°C selon la norme EN 12595 de 90 mm²/s. Sa transmittance, mesurée à 900 nm avec le photomètre Hach Lange DR 3900 ayant une cuve optique en verre de 1cm, était de 0,1%.

### Evaluation des compositions de brai

Dans les exemples ci-après, les compositions ont été évaluées par :
- la mesure de la pénétrabilité à l'aiguille à 25°C (abréviation : Pene), selon la norme EN 1426, les résultats étant exprimés en 1/10 mm,
- la mesure de la température de ramollissement bille anneau (abréviation : TBA), selon la norme EN 1427, les résultats étant exprimés en °C,
- L'indice de pénétrabilité (sans unité) selon la norme DIN EN 1427 Appendice B,
- RTFOT + PAV : La résistance des compositions au durcissement et au vieillissement a été respectivement testée selon la norme DIN EN 12607-1 et les normes DIN EN 12607-1 et EN 14769. La norme européenne DIN EN 12607-1 spécifie la méthode de mesure des effets combinés de la chaleur et de l'air sur un film mince d'une composition en renouvellement constant (RTFOT de l'anglais « Rolling Thin Film Oven Test »). Le vieillissement sous RTFOT a été mené à une température de 163°C, pendant 75 minutes et sous débit d'air de 4 litres/min. Les normes européennes DIN EN 12607-1 + EN 14769 spécifient la méthode de vieillissement accéléré à long terme effectué dans une cuve de vieillissement sous pression (RTFOT + PAV de l'anglais « Presure aging vessel ») ; le vieillissement sous RTFOT a été réalisé dans les conditions données précédemment et celui sous PAV à une température de 100°C, pendant 20 heures et à une pression de 2100 kPa.

### Exemples

### a) Préparation d'une composition hydrocarbonée IC

Les pastilles d'hydroxyde de sodium ont été broyées en une poudre fine, en utilisant un broyeur IKA^{®} A11 (IKA-Werke GmbH & Co) à 28 000 tr / min, pendant environ 30 secondes. Ainsi, des particules d'hydroxyde de sodium (NaOH) ont été obtenues. Leur taille maximale moyenne mesurée sur 20 particules au microscope était d'environ 50 µm. En même temps, 500 g du bitume fluxé ont été chauffés à 50 °C dans un réacteur de diamètre d = 16 cm et sous agitation à 600 tr/min avec un agitateur dissolvant à plaque (diamètre D de la partie mécanique active), avec D / d = 0,4. La température a été contrôlée à l'aide d'un thermostat. 95,24 g d'hydroxyde de sodium en poudre ont été mis en suspension dans le bitume fluxé sous agitation et l'agitation a été maintenue pendant 30 minutes. Dans la composition **IC** obtenue, le % massique de NaOH était de 16%, sur la base de la masse totale de la composition **IC** obtenue. La composition **IC** obtenue a été observée par microscopie sous lumière visible, ce qui a montré que la soude était bien sous la forme de particules dont plus de 80% avaient une taille maximale inférieure ou égale à 50 µm.

### b) Préparation de la composition de brai modifié

La composition **IC** préparée précédemment a été chauffée jusqu'à 50 °C maximum (la viscosité du bitume fluxé diminuant à des températures plus élevées, ce qui entraînerait une vitesse de décantation plus élevée du NaOH) sous agitation dans un réacteur avec un agitateur comme décrit dans la partie a) (D / d = 0,4) à 600 tr/min pour homogénéiser.

En parallèle, 2500 g de brai ont été chauffés à 180 °C dans un réacteur et agités à l'aide d'un agitateur tel que décrit dans la partie a) (D / d = 0,4) à près de 400 tr/min pour homogénéiser le brai. La composition préparée **IC** a été directement ajoutée dans le brai (3,23 g de composition **IC** pour 100 g de brai = 3,13% en masse dans la composition de brai finale). A la fin de l'addition de la composition **IC,** l'agitation a été maintenue pendant 30 minutes.

Le mélange a ensuite été maintenu pendant 3 heures dans des conditions d'agitation à 600 tr/min. La température du mélange a été contrôlée pour ne pas dépasser 170 °C. Des échantillons ont été régulièrement prélevés du réacteur pour mesurer leur TBA et leur Pene. Le mélange a été arrêté lorsque les deux ont été stabilisés. Ensuite, le mélange a été refroidi à 160 °C et 5,04 g du promoteur d'adhésion H1 ont été ajoutés. Le mélange a été maintenu pendant 20 minutes. Dans la composition finale de brai, le % en masse de NaOH était de 0,500 %, de promoteur d'adhésion H1 de 0,194 % en masse et de bitume fluxé de 2,623 % en masse, sur la base de la masse totale de la composition de brai.

Le Tableau 1 ci-après présente la TBA et la Pene, avant et après RTFOT+PAV, pour le brai seul et pour la composition de brai conforme à l'invention.

**Tableau 1**

| | | | **BRAI référence** | **BRAI Modifié H1** | **BRAI Invention** |
|---|---|---|---|---|---|
| **TBA** | DIN EN 1427 | °C | 64,8 | 64,6 | 65,2 |
| **Pene** | DIN EN 1426 | mm/10 | 7 | 8 | 9 |
| **Indice de pénétrabilité** | EN1427-Appendice B | | -1,6 | -1,5 | -1,2 |
| **Résistance au vieillissement RTFOT et PAV** | DIN EN 12607-1+14769 | | | | |
| **TBA** | DIN EN 1427 | °C | 73,2 | 73,4 | 70,6 |
| **Changement TBA** | DIN EN 1427 | °C | 8,4 | 8,6 | 5,4 |
| **Pene** | DIN EN 1426 | mm/10 | 6 | 6 | 8 |
| **Maintien Pene** | DIN EN 1426 | % | 86 | 75 | 89 |

Ces résultats montrent que l'ajout de soude permet d'obtenir une augmentation de l'indice de pénétrabilité. En particulier, l'indice de pénétrabilité obtenu est conforme aux spécificités routières imposées par la norme EN 1427-Appendice B. La valeur de -1,6, obtenue en l'absence d'incorporation de soude est trop faible et n'est pas acceptable.

Par ailleurs, à titre complémentaire, les mesures réalisées sur un brai modifié uniquement par ajout de 0,194 % en masse de promoteur d'adhésion H1 (brai modifié H1) montrent que la stabilité des TBA et Pene après RTFOT et PAV est moins identique, voire moins bonne dans le cas de la Pene, à celle obtenue pour le brai de référence.

## Revendications

1. Composition de brai comprenant un mélange :
- de brai de désasphaltage, qui représente au moins 50% en masse, et de préférence au moins 80% en masse, et préférentiellement au moins 90% en masse, de la masse totale de la composition, et
- d'un hydroxyde XOH avec X = Na ou K, qui représente de 0,001 à 1 % en masse, de la masse totale de la composition.

2. Composition selon la revendication 1, **caractérisée en ce qu'**elle comprend de 0,002 à 0,5 % en masse, de préférence de 0,01 à 0,5 % en masse d'hydroxyde XOH avec X = Na ou K, les % étant des % massiques, par rapport à la masse totale de la composition.

3. Composition selon la revendication 1 ou 2, **caractérisée en ce que** l'hydroxyde XOH, avec X = Na ou K, forme des particules qui ont une taille maximale moyenne dans la gamme de 10 à 100 µm, de préférence dans la gamme de 20 à 60 µm et/ou qui ont une taille maximale inférieure ou égale à 100 µm, de préférence inférieure ou égale à 60 µm.

4. Composition selon l'une des revendications 1 à 3, **caractérisée en ce que** l'hydroxyde XOH est de la soude.

5. Composition selon l'une des revendications 1 à 4, **caractérisée en ce qu'**elle présente un indice de pénétrabilité déterminé selon la norme EN 1427-Appendice B, supérieur à -1,5, de préférence supérieur ou égal à -1,3.

6. Composition selon l'une des revendications 1 à 5, **caractérisée en ce qu'**elle présente une pénétrabilité à l'aiguille à 25°C, déterminée selon la norme EN 1426, qui appartient à la gamme allant de 0 à 50 mm/10 et/ou une température de ramollissement bille anneau, déterminée selon la norme EN 1427, qui appartient à la gamme allant de 50 à 175 °C.

7. Composition selon l'une des revendications 1 à 6, **caractérisée en ce qu'**elle comprend, en outre, un composant hydrocarboné **CH,** choisi parmi les huiles hydrocarbonées, les bitumes de grade mou, les bitumes fluxés, les bitumes fluidifiés et leurs mélanges, ledit composant hydrocarboné **CH** représentant de préférence au plus 10% en masse, préférentiellement 0,1 à 10% en masse, de manière plus préférée 0,5 à 8% en masse, et de manière encore plus préférée 1 à 5% en masse, de la masse totale de la composition.

8. Procédé de préparation d'une composition de brai, comprenant les étapes suivantes :
a- disposer d'une composition initiale de brai, et
b- incorporer un hydroxyde XOH avec X = Na ou K, dans une quantité telle que la quantité d'hydroxyde XOH introduite représente de 0,001 à 1% en masse, de la masse totale de la composition de brai finale obtenue,
la composition initiale de brai comprenant du brai en quantité telle que le brai représente au moins 50% en masse, de préférence au moins 80% en masse,
et préférentiellement au moins 90% en masse, de la masse totale de la composition de brai finale obtenue.

9. Procédé de préparation selon la revendication 8 **caractérisé en ce qu'**à l'étape b, une composition hydrocarbonée **IC** comprenant de 15 à 50% en masse d'hydroxyde XOH avec X = Na ou K est incorporée à la composition initiale de brai, ladite composition **IC,** comprenant un composant hydrocarboné **CH,** de préférence choisi parmi les huiles hydrocarbonées, les bitumes de grade mou, les bitumes fluxés, les bitumes fluidifiés et leurs mélanges.

10. Procédé de préparation selon la revendication 9 **caractérisé en ce que** l'hydroxyde XOH, avec X = Na ou K, est présent dans la composition **IC,** sous la forme de particules qui ont une taille maximale moyenne dans la gamme de 10 à 100 µm, de préférence dans la gamme de 20 à 60 µm et/ou qui ont une taille maximale inférieure ou égale à 100 µm, de préférence inférieure ou égale à 60 µm.

11. Procédé de préparation selon l'une des revendications 8 à 10 **caractérisé en ce que** l'incorporation de la composition hydrocarbonée **IC** dans la composition initiale de brai, est effectuée, à une température appartenant à la gamme allant de 150 à 220 °C, de préférence à la gamme allant de 160 à 190 °C et/ou avec une agitation appartenant à la gamme allant de 100 à 500 tr/min, de préférence à la gamme allant de 200 à 400 tr/min et/ou pendant une durée de 10 à 180 minutes, de préférence de 10 à 20 minutes.

12. Utilisation d'un hydroxyde XOH avec X = Na ou K, dans une composition qui comprend du brai représentant au moins 50% en masse, de préférence au moins 80% en masse, et préférentiellement au moins 90% en masse, de la masse totale de la composition, dans laquelle l'hydroxyde XOH avec X = Na ou K est introduit dans la composition, dans une quantité représentant de 0,001 à 1% en masse, de préférence, de 0,002 à 0,5 % en masse, et préférentiellement de 0,01 à 0,5 % en masse, de la masse totale de la composition, pour augmenter l'indice de pénétrabilité déterminé selon la norme EN 1427-Appendice B de la composition obtenue, et obtenir, notamment, un indice de pénétrabilité supérieur à -1,5, de préférence supérieur ou égal à -1,3, les % en masse donnés pour le brai et l'hydroxyde étant calculés par rapport à la masse totale de la composition incluant l'hydroxyde.

13. Utilisation d'une composition selon l'une quelconque des revendications 1 à 7, pour préparer un revêtement d'étanchéité, une membrane ou une couche d'imprégnation.

14. Procédé de préparation d'un enrobé **caractérisé en ce qu'**il comprend le mélange à chaud d'une composition selon l'une quelconque des revendications 1 à 7, avec des granulats, et éventuellement des charges minérales et/ou synthétiques.

15. Enrobé comprenant une composition selon l'une quelconque des revendications 1 à 7, en mélange avec des granulats, et éventuellement des charges minérales et/ou synthétiques.

16. Procédé de préparation d'un asphalte **caractérisé en ce qu'**il comprend le mélange à chaud d'une composition selon l'une quelconque des revendications 1 à 7, avec des charges minérales et/ou synthétiques.

17. Asphalte comprenant une composition selon l'une quelconque des revendications 1 à 7, en mélange avec des charges minérales et/ou synthétiques.

18. Utilisation d'une composition selon l'une quelconque des revendications 1 à 7, pour préparer un enduit superficiel, un enrobé à chaud, un enrobé à froid, un enrobé coulé à froid, une grave émulsion ou une couche de roulement, ladite composition étant associée à des granulats et/ou des fraisats de recyclage.

## Patentansprüche

1. Pechzusammensetzung, umfassend eine Mischung:
- aus Pech zur Entasphaltierung, das mindestens 50 Masse-% und bevorzugt mindestens 80 Masse-% und vorzugsweise mindestens 90 Masse-% der Gesamtmasse der Zusammensetzung darstellt, und
- eines XOH-Hydroxids, wobei X = Na oder K, das 0,001 bis 1 Masse-% der Gesamtmasse der Zusammensetzung darstellt.

2. Zusammensetzung nach Anspruch 1, **dadurch gekennzeichnet, dass** sie 0,002 bis 0,5 Masse-%, bevorzugt 0,01 bis 0,5 Masse-% XOH-Hydroxid, wobei X = Na oder K, wobei die % Masse-% sind, in Bezug auf die Gesamtmasse der Zusammensetzung umfasst.

3. Zusammensetzung nach Anspruch 1 oder 2, **dadurch gekennzeichnet, dass** das XOH-Hydroxid, wobei X = Na oder K, Partikel bildet, die eine maximale mittlere Größe in dem Bereich von 10 bis 100 µm, bevorzugt in dem Bereich von 20 bis 60 µm aufweisen und/oder die eine maximale Größe kleiner als oder gleich 100 µm, bevorzugt kleiner als oder gleich 60 µm aufweisen.

4. Zusammensetzung nach einem der Ansprüche 1 bis 3, **dadurch gekennzeichnet, dass** das XOH-Hydroxid aus Natron ist.

5. Zusammensetzung nach einem der Ansprüche 1 bis 4, **dadurch gekennzeichnet, dass** sie einen Durchlässigkeitsindex, bestimmt gemäß dem Standard EN 1427-Anlage B, von größer als -1,5, bevorzugt größer als oder gleich -1,3 aufweist.

6. Zusammensetzung nach einem der Ansprüche 1 bis 5, **dadurch gekennzeichnet, dass** sie eine Nadeldurchlässigkeit bei 25 °C, bestimmt gemäß dem Standard EN 1426, die in dem Bereich von 0 bis 50 mm/10 liegt, und/oder eine Ringerweichungstemperatur, bestimmt gemäß dem Standard EN 1427, die in dem Bereich von 50 bis 175 °C liegt, aufweist.

7. Zusammensetzung nach einem der Ansprüche 1 bis 6, **dadurch gekennzeichnet, dass** sie ferner eine Kohlenwasserstoffkomponente CH umfasst, ausgewählt aus Kohlenwasserstoffölen, Weichbitumen, Flussbitumen, Fließbitumen und Mischungen davon, wobei die Kohlenwasserstoffkomponente CH bevorzugt höchstens 10 Masse-%, vorzugsweise 0,1 bis 10 Masse-%, bevorzugter 0,5 bis 8 Masse-% und noch bevorzugter 1 bis 5 Masse-% der Gesamtmasse der Zusammensetzung darstellt.

8. Verfahren zur Herstellung einer Pechkomposition, umfassend die folgenden Schritte:
a- Anordnen einer anfänglichen Pechzusammensetzung und
b- Einarbeiten eines XOH-Hydroxids, wobei X = Na oder K, in einer Menge, sodass die Menge des eingebrachten XOH-Hydroxids 0,001 bis 1 Masse-% der Gesamtmasse der final erhaltenen Pechzusammensetzung darstellt,
wobei die anfängliche Pechzusammensetzung Pech in einer Menge umfasst, sodass das Pech mindestens 50 Masse-%, bevorzugt mindestens 80 Masse-% und vorzugsweise mindestens 90 Masse-% der Gesamtmasse der final erhaltenen Pechzusammensetzung darstellt.

9. Verfahren zur Herstellung nach Anspruch 8, **dadurch gekennzeichnet, dass** in Schritt b eine Kohlenwasserstoffzusammensetzung IC, die 15 bis 50 Masse-% XOH-Hydroxid umfasst, wobei X = Na oder K, in die anfängliche Pechzusammensetzung eingearbeitet wird, wobei die Zusammensetzung IC eine Kohlenwasserstoffkomponente CH umfasst, die bevorzugt aus Kohlenwasserstoffölen, Weichbitumen, Flussbitumen, Fließbitumen und Mischungen davon ausgewählt ist.

10. Verfahren zur Herstellung nach Anspruch 9, **dadurch gekennzeichnet, dass** das XOH-Hydroxid, wobei X = Na oder K, in der Zusammensetzung IC in der Form von Partikeln vorhanden ist, die eine maximale mittlere Größe in dem Bereich von 10 bis 100 µm, bevorzugt in dem Bereich von 20 bis 60 µm aufweisen und/oder die eine maximale Größe kleiner als oder gleich 100 µm, bevorzugt kleiner als oder gleich 60 µm aufweisen.

11. Verfahren zur Herstellung nach einem der Ansprüche 8 bis 10, **dadurch gekennzeichnet, dass** das Einarbeiten der Kohlenwasserstoffzusammensetzung IC in die anfängliche Pechzusammensetzung bei einer Temperatur, die in dem Bereich von 150 bis 220 °C liegt, bevorzugt in dem Bereich von 160 bis 190 °C liegt und/oder mit einer Agitation, die in dem Bereich von 100 bis 500 tr/min liegt, bevorzugt in dem Bereich von 200 bis 400 tr/min liegt, und/oder während einer Dauer von 10 bis 180 Minuten, bevorzugt von 10 bis 20 Minuten bewirkt wird.

12. Verwendung eines XOH-Hydroxids, wobei X = Na oder K, in einer Zusammensetzung, die ein Pech umfasst, das mindestens 50 Masse-%, bevorzugt mindestens 80 Masse-% und vorzugsweise mindestens 90 Masse-% der Gesamtmasse der Zusammensetzung darstellt, wobei das XOH-Hydroxid, wobei X = Na oder K, in die Zusammensetzung in einer Menge eingebracht wird, die 0,001 bis 1 Masse-%, bevorzugt 0,002 bis 0,5 Masse-% und vorzugsweise 0,01 bis 0,5 Masse-% der Gesamtmasse der Zusammensetzung darstellt, um den Durchlässigkeitsindex, bestimmt gemäß dem Standard EN 1427-Anlage B der erhaltenen Zusammensetzung zu erhöhen und insbesondere einen Durchlässigkeitsindex größer als -1,5, bevorzugt größer als oder gleich -1,3 zu erhalten, wobei die für das Pech und das Hydroxid gegebenen Masse-% in Bezug auf die Gesamtmasse der Zusammensetzung, die das Hydroxid beinhaltet, berechnet sind.

13. Verwendung einer Zusammensetzung nach einem der Ansprüche 1 bis 7 zum Herstellen einer Abdichtungsbeschichtung, einer Membran oder einer Imprägnierschicht.

14. Verfahren zur Herstellung einer Umhüllung, **dadurch gekennzeichnet, dass** es Heißmischen einer Zusammensetzung nach einem der Ansprüche 1 bis 7 mit Granulat und optional mineralischen und/oder synthetischen Ladungen umfasst.

15. Umhüllung, umfassend eine Zusammensetzung nach einem der Ansprüche 1 bis 7, gemischt mit Granulat und optional mineralischen und/oder synthetischen Ladungen.

16. Verfahren zur Herstellung eines Asphalts, **dadurch gekennzeichnet, dass** es Heißmischen einer Zusammensetzung nach einem der Ansprüche 1 bis 7 mit mineralischen und/oder synthetischen Ladungen umfasst.

17. Asphalt umfassend eine Zusammensetzung nach einem der Ansprüche 1 bis 7, gemischt mit mineralischen und/oder synthetischen Ladungen.

18. Verwendung einer Zusammensetzung nach einem der Ansprüche 1 bis 7 zur Herstellung eines Oberflächenüberzugs, einer Heißumhüllung, einer Kaltumhüllung, einer Kaltgussumhüllung, einer Haftemulsion oder einer Laufschicht, wobei die Zusammensetzung mit Granulat und/oder Recyclinggut assoziiert ist.

## Claims

1. Pitch composition comprising a mixture of:
- deasphalting pitch, which represents at least 50% by weight, and preferably at least 80% by weight, and preferentially at least 90% by weight, of the total weight of the composition, and
- a hydroxide XOH with X = Na or K, which represents from 0.001 to 1% by weight, of the total weight of the composition.

2. Composition according to claim 1, **characterised in that** it comprises from 0.002 to 0.5 % by weight, preferably from 0.01 to 0.5 % by weight of hydroxide XOH with X = Na or K, the % being % by weight, relative to the total weight of the composition.

3. Composition according to claim 1 or 2, **characterised in that** the hydroxide XOH, with X = Na or K, forms particles which have a mean maximum size in the range from 10 to 100 µm, preferably in the range from 20 to 60 µm and/or which have a maximum size less than or equal to 100 µm, preferably less than or equal to 60 µm.

4. Composition according to one of claims 1 to 3, **characterised in that** the hydroxide XOH is soda.

5. Composition according to one of claims 1 to 4, **characterised in that** it has a penetration index determined according to standard EN 1427-Appendix B, greater than -1.5, preferably greater than or equal to -1.3.

6. Composition according to one of claims 1 to 5, **characterised in that** it has needle penetration at 25°C, determined according to standard EN 1426, which falls within the range from 0 to 50 mm/10 and/or a ball and ring softening temperature, determined according to standard EN 1427, which falls within the range from 50 to 175 °C.

7. Composition according to one of claims 1 to 6, **characterised in that** it comprises, in addition, a hydrocarbonated component **CH,** chosen from among hydrocarbonated oils, soft-grade bitumen, fluxed bitumen, fluidified bitumen, and mixtures thereof, said hydrocarbonated component **CH** preferably representing at the most 10% by weight, preferentially 0.1 to 10% by weight, in a more preferred manner 0.5 to 8% by weight, and even more preferably 1 to 5% by weight, of the total weight of the composition.

8. Method for the preparation of a pitch composition, comprising the following steps:
a- having an initial pitch composition, and
b- incorporating a hydroxide XOH with X = Na or K, in an amount such that the amount of hydroxide XOH introduced represents 0.001 to 1% by weight, of the total weight of the final pitch composition obtained,
the initial pitch composition comprising an amount of pitch such that the pitch represents at least 50% by weight, preferably at least 80% by weight, and
preferably at least 90% by weight, of the total weight of the final pitch composition obtained.

9. Preparation method according to claim 8 **characterised in that** in step b, a hydrocarbonated composition **IC** comprising from 15 to 50% by weight of the hydroxide XOH with X = Na or K is incorporated into the initial pitch composition, said composition **IC** comprising a hydrocarbonated component **CH,** preferably chosen from among hydrocarbonated oils, soft-grade bitumen, fluxed bitumen, fluidified bitumen and mixtures thereof.

10. Preparation method according to claim 9 **characterised in that** the hydroxide XOH, with X = Na or K, is present in the composition **IC,** in the form of particles which have a mean maximum size in the range from 10 to 100 µm, preferably in the range from 20 to 60 µm and/or which have a maximum size less than or equal to 100 µm, preferably less than or equal to 60 µm.

11. Preparation method according to one of claims 8 to 10 **characterised in that** the incorporation of the hydrocarbonated composition **IC** into the initial pitch composition is carried out at a temperature in the range from 150 to 220°C, preferably in the range from 160 to 190°C and/or with stirring in the range from 100 to 500 rpm, preferably in the range from 200 to 400 rpm and/or for a period of 10 to 180 minutes, preferably from 10 to 20 minutes.

12. Use of a hydroxide XOH with X = Na or K, in a composition which comprises pitch representing at least 50% by weight, preferably at least 80% by weight, and preferentially at least 90% by weight, of the total weight of the composition, in which the hydroxide XOH with X = Na or K is introduced into the composition, in an amount representing from 0.001 to 1% by weight, preferably from 0.002 to 0.5% by weight, and preferentially from 0.01 to 0.5% by weight, of the total weight of the composition, to increase the penetration index determined according to standard EN 1427-Appendix B of the composition obtained, and to obtain, in particular, a penetration index greater than -1.5, preferably greater than or equal to -1.3, the % by weight given for pitch and hydroxide being calculated relative to the total weight of the composition including the hydroxide.

13. Use of a composition according to any one of claims 1 to 7, to prepare waterproof coating, a membrane or impregnation layer.

14. Method for the preparation of a mix **characterised in that** it comprises hot mixing of a composition according to any one of claims 1 to 7, with aggregates, and possibly mineral and/or synthetic fillers.

15. Mix comprising a composition according to any one of claims 1 to 7, mixed with aggregates, and possibly mineral and/or synthetic fillers.

16. Method for the preparation of an asphalt **characterised in that** it comprises hot mixing of a composition according to any one of claims 1 to 7, with mineral and/or synthetic fillers.

17. Asphalt comprising a composition according to any one of claims 1 to 7, mixed with aggregates, and possibly mineral and/or synthetic fillers.

18. Use of a composition according to any one of claims 1 to 7, to prepare a surface coat, a hot mix, cold mix, cold-poured mix, grave-emulsion or rolling layer, said composition being associated with aggregates and/or recycled milled material.
